# EUROPÄISCHE PATENTSCHRIFT

(11) **EP 3 513 491 B1**
(45) Veröffentlichungstag und Bekanntmachung des Hinweises auf die Patenterteilung: **26.04.2023**
(21) Anmeldenummer: 16795292.8
(22) Anmeldetag: 10.11.2016
(51) Int. Cl.: H02P 1/46, H02P 6/18, H02P 6/20, H02P 6/182

(54) **VERFAHREN ZUR INBETRIEBNAHME EINER PERMANENTERREGTE SYNCHRONMASCHINE UND PERMANENTERREGTE SYNCHRONMASCHINE**
METHOD FOR STARTING UP A PERMANENT-MAGNET SYNCHRONOUS MACHINE, AND PERMANENT-MAGNET SYNCHRONOUS MACHINE
PROCÉDÉ DE MISE EN MARCHE D'UNE MACHINE SYNCHRONE À EXCITATION PERMANENTE ET MACHINE SYNCHRONE À EXCITATION PERMANENTE

(43) Veröffentlichungstag der Anmeldung: 24.07.2019
(73) Patentinhaber: Siemens Aktiengesellschaft, 80333 München (DE)
(72) Erfinder: NANNEN, Hauke, 90443 Nürnberg (DE); ZATOCIL, Heiko, 90469 Nürnberg (DE)
(74) Vertreter: Siemens Patent Attorneys
(86) Internationale Anmeldenummer: PCT/EP2016/077201
(87) Internationale Veröffentlichungsnummer: WO 2018/086688

(56) Entgegenhaltungen:
- DE-A1-102010 008 814
- Marcel Benecke: "Anlauf von energieeffizienten Synchronmaschinen mit Drehstromsteller", , 6. September 2012 (2012-09-06), XP055392434, Gefunden im Internet: URL:http://d-nb.info/1054135258/34 [gefunden am 2017-07-20]
- KUANG-YAO CHENG ET AL: "Design of a sensorless commutation IC for BLDC motors", IEEE TRANSACTIONS ON POWER ELECTRONICS, INSTITUTE OF ELECTRICAL AND ELECTRONICS ENGINEERS, USA, Bd. 18, Nr. 6, 1. November 2003 (2003-11-01), Seiten 1365-1375, XP011103246, ISSN: 0885-8993, DOI: 10.1109/TPEL.2003.818867
- P.P. ACARNLEY ET AL: "Review of position-sensorless operation of brushless permanent-magnet machines", IEEE TRANSACTIONS ON INDUSTRIAL ELECTRONICS, Bd. 53, Nr. 2, 1. April 2006 (2006-04-01), Seiten 352-362, XP055018619, ISSN: 0278-0046, DOI: 10.1109/TIE.2006.870868

## Beschreibung

Eine Drehstrommaschine wandelt mechanische Energie in Drehstrom oder Drehstrom in mechanische Energie um. Sie kann grundsätzlich als elektrischer Generator oder als Elektromotor betrieben werden. Als Sanftanlauf werden Maßnahmen zur Leistungsbegrenzung beim Einschalten eines elektrischen Gerätes, beispielsweise eines elektrischen Motors, bezeichnet.

Drehstrommaschinen werden gemäß der IEC-Norm 60034 anhand ihres Wirkungsgrades in verschiedene Energieeffizienzklassen eingeteilt. Gerade im unteren Leistungsbereich bis ca. 20kW lassen sich die gesetzlichen Wirkungsgrade für Elektroantriebe nur schwer einhalten, weshalb vermehrt die Verwendung von Permanentmagneten im Rotor angestrebt wird, z. B. als Permanenterregte Synchronmaschine (PMSM).

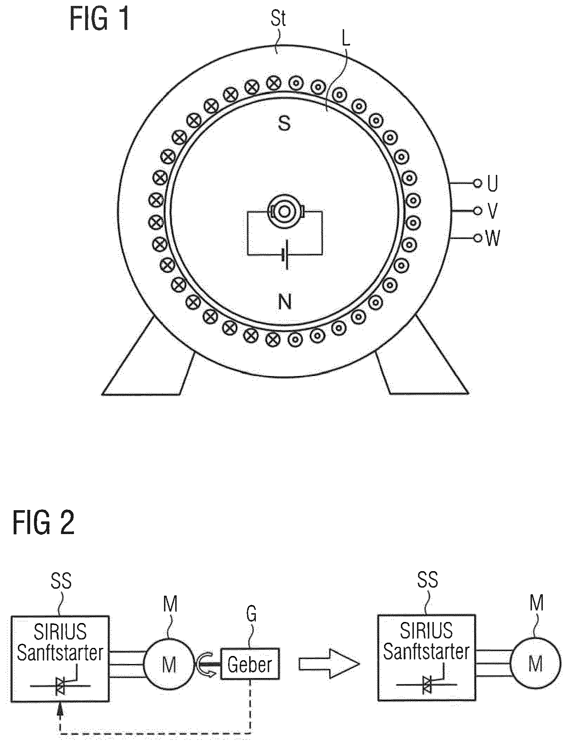

Figur 1 zeigt eine schematische Darstellung einer solchen Permanenterregten Synchronmaschine, in der Ausführung als Innenpolmaschine mit einem Stator St und einem Läufer L. Der Läufer umfasst einen magnetischen Nordpol N und Südpol S und Wicklungssträngen U, V, W. Die Darstellung ist lediglich beispielhaft zu verstehen und hat keine einschränkende Wirkung auf den Schutzbereich des beanspruchten Gegenstands.

Dieser Maschinentyp ermöglicht zwar hohe Energieeffizienzgrade, jedoch sind der Start sowie der Betrieb am starren Netz nicht ohne weiteres möglich.

Um dies zu ermöglichen, kann ein Dämpferkäfig im Läufer der Maschine vorgesehen werden, welcher zwar einen sicheren Hochlauf am starren Netz ermöglicht, jedoch das speisende Netz durch sehr hohe Anlaufströme über Gebühr belastet.

Ebenso ist der Betrieb an einem geeigneten leistungselektronischen Stellglied, wie zum Beispiel einem Frequenzumrichter oder Sanftstarter, möglich. Hier stellt insbesondere der Einsatz eines Sanftstarters, auch Sanftanlaufgerät genannt, eine kostenfreundliche Lösung zum Hochlauf einer PMSM am starren Netz dar. Ein solches Sanftanlaufgerät reduziert beim Einschalten (z. B. mittels Phasenanschnitt) die Spannung und erhöht diese langsam bis zur vollen Netzspannung. Ein derartiger Sanftanlauf ist allerdings häufig nur im lastlosen Zustand oder bei geringer Last möglich. Derzeit ist hierfür noch keine marktreife Lösung bekannt.

In der Dissertation von Herr Dr. Marcel Benecke (Universität Magdeburg) mit dem Titel "Anlauf von energieeffizienten Synchronmaschinen mit Drehstromsteller" wird eine Lösung zum Hochlauf der Permanenterregten Synchronmaschine an einem Sanftstarter vorgestellt. Das in dieser Arbeit vorgestellte Verfahren benötigt jedoch den aktuellen Polradwinkel der Maschine, sodass die für die Arbeit verwendeten Motoren mit einem entsprechenden Gebersystem ausgestattet werden mussten. Unter einem Geber versteht man Drehzahl- und Lagegeber. Diese erfassen, die mechanischen Größen Drehzahl und Lage. Ihre Signale sind erforderlich, um die Regler mit Istwerten zu versorgen und die vorhandenen Lage- und Drehzahlregelkreise zu schließen. Für die vektoriellen Regelverfahren bei Drehstromantrieben dienen die Lage- und Drehzahlsignale auch als wichtige Eingangsgröße für den Stromregelkreis. Der Geber erfasst in diesem Fall die Drehzahl und/oder Lage unmittelbar an der Motorwelle.

Vom gleichen Autor gibt es weiterhin eine Patentanmeldung DE 10 2010 008 814 A1, die ebenfalls einen permanenterregten Synchronmotor mit dreiphasigen Drehstromsteller beschreibt, wobei immer nur zwei der drei Phasen erregt werden. Bei dem beschriebenen Verfahren wird eine initiale Position des Läufers ermittelt und nach Drehung des Läufers ein optimaler Zündwinkel ermittelt. Auch hier wird ein entsprechendes Gebersystem benötigt.

Das Gebersystem wirkt sich negativ auf die Kosten und die Verfügbarkeit des Systems aus, was derzeit eine Sanftstarterlösung für hocheffiziente Motoren unattraktiv macht. Aus diesen Gründen ist ein Verfahren zum Hochlauf ohne Geber anzustreben.

Es ist Aufgabe der Erfindung, ein Verfahren zum Hochlauf einer Permanenterregten Synchronmaschine ohne Geber anzugeben. Es ist weiterhin Aufgabe der Erfindung, eine Permanenterregten Synchronmaschine ohne Geber anzugeben, welche mit dem erfindungsgemäßen Verfahren arbeitet.

Die Aufgabe wird gelöst durch ein Verfahren aufweisend die Merkmale des unabhängigen Patentanspruchs 1 sowie eine Vorrichtung aufweisend die Merkmale des unabhängigen Patentanspruchs 6.

Das benötigte Startverfahren unterscheidet sich zu den im Stand der Technik bekannten geberlosen Verfahren dahingehend, dass es für einen Thyristorsteller und nicht einen Frequenzumrichter verwendbar sein muss. Dies hat direkt zur Folge, dass ein Verfahren mit Testsignalaufschaltung bei geringen Drehzahlen aufgrund der Hardware-Topologie nicht realisierbar ist - die bekannten Verfahren sind nicht auf den vorliegenden Anwendungsfall übertragbar.

Voraussetzung für das erfindungsgemäße Verfahren ist es, die initiale Rotorposition, den optimalen Zündwinkel für die Drehstrommaschine vorab zu ermitteln. Ein mögliches Verfahren hierfür ist Gegenstand einer anderen Patentanmeldung, PCT/EP2016/074880.

Das hier beschriebene Verfahren geht im Folgenden davon aus, dass es beim Starten auf diesen bekannten Winkel zurückgreifen kann.

Wie bereits beschrieben, setzen alle bekannten geberlosen Verfahren einen Pulswechselrichter voraus.

Das bekannte Startverfahren der Permanenterregten Synchronmaschine an einem Sanftanlaufgerät benötigt den elektrischen Winkel des Motors und bezieht diesen aus einem Messsystem.

Das hier beschriebene Verfahren basiert auf der Grundidee, dass bei der erstmaligen Zündung der Thyristoren die Maschine mit dem maximal möglichen Drehmoment beschleunigt wird. Hierdurch soll sichergestellt werden, dass der Motor nach der Erstzündung bereits eine bestimme minimale Drehzahl überschritten hat und somit die induzierten Spannungen während der prinzipbedingten Sperrzeit der Thyristoren hinreichend genau gemessen werden können. Aus den induzierten Spannungen kann anschließend nach den bereits bekannten sog. EMK-Verfahren der elektrische Winkel des Motors ermittelt und dem Benecke-Verfahren (aus der oben genannten Dissertation) übergeben werden. Zudem kann während einer zweiphasigen Zündung die Spannung der dritten Phase direkt gemessen und bei der Auswertung berücksichtigt werden.

Da Motoren an Sanftanlaufgeräten meist passive Lasten mit linearen oder quadratischen Lastkennlinien treiben, dient das Drehmoment bei der Erstzündung nahezu vollständig zur Beschleunigung der trägen Masse. Insofern kann davon ausgegangen werden, dass die Beschleunigung bei der Erstzündung ausreichend ist und die induzierten Spannungen hinreichend genau gemessen werden können. Bei der Messung der Spannungen kann auf die im Serien-Sanftanlaufgerät ohnehin vorhandene Messsensorik zurückgegriffen werden. Das Verfahren benötigt also keine zusätzliche Hardware.

Die Erfindung wird auch durch die folgenden Figuren dargestellt:
Figur 1 zeigt einen Schnitt durch eine beispielhafte Drehstrom-Maschine,
Figur 2 eine schematische Darstellung des erfindungsgemäßen Aufbaus,
Figur 3 zeigt ein Ablaufdiagramm,
Figur 4 zeigt den gemessenen Verlauf der elektromotorischen Kraft EMK beim Austrudeln,
Figuren 5 und 7 zeigen jeweils den Verlauf einer gemessenen EMK und
Figuren 6 und 8 den dazugehörigen resultierenden Winkel aus Arkustangens (ATAN)-Berechnung.

Figur 2 zeigt den prinzipiellen gewünschten Aufbau der Permanenterregten Synchronmaschine (M) mit Sanftstarter (SS) ohne Geber und mit Geber (G) links.

Im Folgenden werden die einzelnen Schritte genauer erläutert.

Schritt 1: Ermittlung des optimalen Zündwinkels:
Nachdem das Verfahren zur initialen Ausrichtung der Maschine abgeschlossen ist, ist der aktuelle Winkel des Motors bekannt. Basierend auf diesem bekannten Startwinkel kann gemäß dem oben genannten Verfahren jener Zündwinkel des Sanftstarters berechnet werden, bei dem das im Motor erzeugte Drehmoment für einen gegebenen Maximalstrom maximal ist. Um bei der ersten Zündung der Thyristoren ein möglichst hohes Drehmoment zu entwickeln, wird der bei der Erstzündung zulässige Maximalstrom auf den für die Leistungshalbleiter maximal zulässigen Strom gesetzt.

Bei der Berechnung des optimalen Zündwinkels geht generell auch der Verlauf des Drehwinkels und der Drehzahl während der Zündung der Thyristoren ein, jedoch sind diese bei der Berechnung des Zündwinkels nicht bekannt. Aus diesem Grund soll der optimale Zündwinkel für die Erstzündung im Rahmen eines Inbetriebnahmeverfahrens vorab für den Antrieb ermittelt werden.

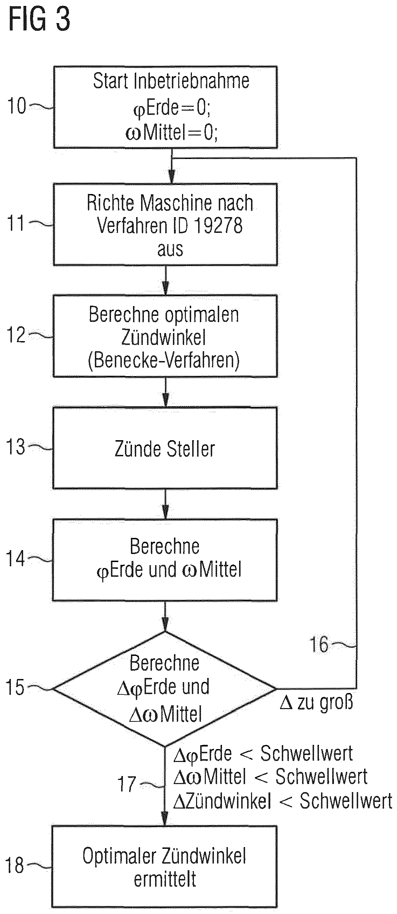

Das Ablaufdiagramm aus Figur 3 veranschaulicht ein mögliches Vorgehen. Der optimale Zündwinkel wird berechnet, der Sanftstarter mit diesem einmalig gezündet und anschließend der Endwinkel und die mittlere Drehzahl ermittelt. Mit diesen Werten wird erneut ein optimaler Zündwinkel berechnet, der Motor beispielsweise nach dem Verfahren, das in der parallelen Anmeldung PCT/EP2016/074880 beschrieben ist, ausgerichtet und von neuem gestartet. Dieses Procedere wird so lange wiederholt bis das Abbruchkriterium (z.B. Änderung der Werte zwischen den Durchläufen) erfüllt ist.

In Schritt 10 werden die Werte ϕ_{Erde} und ω_{Mittel} auf 0 gesetzt.

In Schritt 11 wird die Permanenterregte Synchronmaschine initial ausgerichtet. ϕ_{Erde} ist der Rotorwinkel und ω_{Mittel} die Winkelgeschwindigkeit (siehe Benecke).

Im nächsten Schritt 12 wird der optimale Zündwinkel errechnet, beispielsweise gemäß dem Verfahren, welches in der Beschreibungseinleitung referenziert ist.

Schritt 13 umfasst die Zündung der Thyristoren (Steller). Daraufhin werden das Delta Δϕ_{Erde} und Δω_{Mittel} ermittelt, in Schritt 15.

Sofern Δϕ_{Erde} und Δω_{Mittel} und ΔZündwinkel alle unter einem festgelegten Schwellwert liegen, 17, ist damit der optimale Zündwinkel berechnet, 18. Anderenfalls, falls eines der Δ Werte zu hoch ist, muss das Verfahren erneut durchlaufen werden.

Es ist denkbar, den optimalen Zündwinkel für die Erstzündung nicht durch Berechnung zu ermitteln, sondern alleine aufgrund der Größen ϕ_{Erde} und ω_{Mittel}, die während der Inbetriebnahme berechnet werden, zu bestimmen. Jener Winkel, für den ϕ_{Erde} bzw. ω_{Mittel} maximal ist, stellt den optimalen Zündwinkel dar.

### Schritt 2: Umschaltung auf EMK (Elektromotorische Kraft)-Verfahren:

Nachdem die Permanenterregte Synchronmaschine durch die Erstzündung beschleunigt wurde, sind die durch die Drehung der Maschine induzierten Spannungen groß genug, um sie während der Sperrphase der Thyristoren messen zu können. Aus den gemessenen Spannungen kann anschließend z. B. durch einen Beobachter oder durch eine einfache Arcustangensberechnung der Flusswinkel der Maschine ermittelt werden. Ebenso ist es denkbar, den Drehwinkel alleine auf Basis der anregenden Spannungen, der gemessenen Ströme und der Maschinengleichungen, also mithilfe einer Berechnungsvorschrift, zu ermitteln.

Unabhängig vom gewählten Ansatz sind in den genannten Fällen bereits zahlreiche Verfahren aus dem Gebiet der geberlosen

Regelung bekannt und es kann auf diese zurückgegriffen werden.

Der aus dem EMK-Verfahren ermittelte Flusswinkel wird dem Benecke-Verfahren als Istwert übergeben und hieraus der nächste optimale Zündwinkel bei Drehung der Maschine ermittelt.

### Messungen:

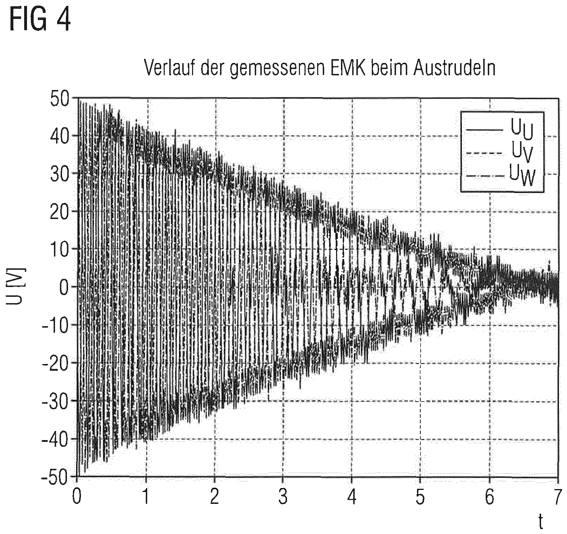

In den Figuren 4 bis 8 sind Diagramme aus Messungen an einer realen Permanenterregten Drehstrommaschine im Labor dargestellt. Diese zeigen, dass die Ermittlung des Flusswinkels aus den gemessenen Spannungen bereits mittels einer einfachen Arcustangensberechnung möglich ist.

Figur 4 zeigt den Verlauf der gemessenen Elektromagnetischen Kraft EMK beim Austrudeln der Maschine, Spannung U ist aufgetragen gegen die Zeit t.

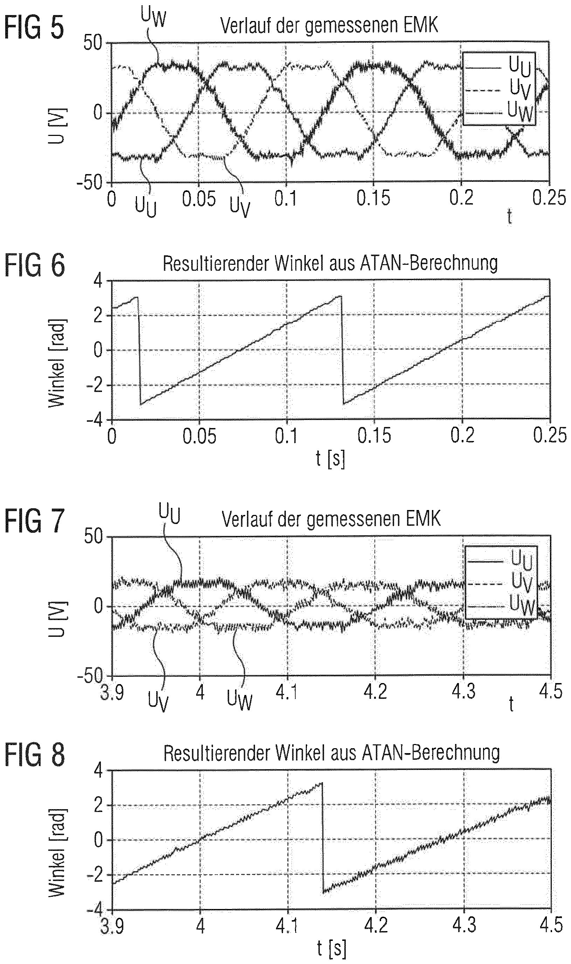

Figuren 5 und 7 zeigen Messungen bezüglich des gemessenen EMK gegen die Zeit, und den jeweils dazu berechneten Winkel aus einer Arcus-Tangens-Berechnung.

Um die in der IEC-Norm 60034 definierte Energieffizienzklasse IE4 zu erreichen, ist es nötig, Permanenterregte Synchronmaschinen (PMSM) direkt am Netz zu betreiben. Da dies nicht ohne weiteres möglich ist (siehe oben), kommen Sanftanlaufgeräte als kosteneffiziente Lösung in Frage. Um dies zu erreichen, wird beim Stand der Technik ein (kostenintensives) Gebersystem benötigt. Für eine ökonomisch sinnvolle Lösung muss ein geberloser Hochlauf ermöglicht werden.

Das benötigte Startverfahren unterscheidet sich zu den in Wissenschaft und Technik bekannten geberlosen Verfahren dahingehend, dass es für einen Thyristorsteller und nicht einen Frequenzumrichter verwendbar sein muss. Somit sind diese bekannten Verfahren nicht anwendbar.

Zusammenfassend basiert die grundlegende Idee darauf, dass der Motor mit der ersten Zündung der Thyristoren maximal beschleunigt wird und anschließend der Flusswinkel der Maschine aufgrund der gemessenen induzierten Spannungen berechnet wird. Nach dem ersten Zündvorgang kann der Flusswinkel der Maschine bereits direkt aus der gemessenen Klemmenspannung (die Phasenströme sind währenddessen Null) ermittelt werden. Die Ermittlung basiert nicht auf einem Berechnungsmodell, sondern auf der direkten Messung der induzierten Spannungen, also der Elektromotorischen Kraft, EMK. Für den zweiten Zündvorgang kann dann auf den berechneten Winkel zurückgegriffen werden. Messungen zeigen, dass der Winkel selbst bei niedrigen Drehzahlen sehr gut aus den gemessenen Spannungen ermittelt werden kann.

Um bei der ersten Zündung die Maschine wirklich maximal zu beschleunigen, kann der optimale Zündwinkel zum Start der Maschine (der Startwinkel ist bekannt) im Rahmen eines beschriebenen Inbetriebnahmeverfahrens genau ermittelt werden. Das beschriebene Startverfahren basiert alleine auf den im Seriengerät bereits vorhandenen Messwerten und benötigt keine zusätzliche Sensorik. Es ist somit möglich, ein bestehendes Produkt alleine durch eine Softwarelösung für den Betrieb eines IE4-Motors zu erweitern.

## Patentansprüche

1. Verfahren zur Inbetriebnahme einer Permanenterregte Synchronmaschine (M) beinhaltend einen Läufer (L), einen Stator (St), und einen Sanftstarter (SS) mit Thyristoren, mit folgenden Schritten
a) Setzen der Werte Rotorwinkel ϕ_{Erde} und Winkelgeschwindigkeit ω_{Mittel} auf 0 (10),
b) Ausrichten des Läufers (L) in eine initiale Position (11),
c) Ermitteln eines optimalen Zünd-Winkels des Motors,
d) Drehung des Läufers (L) aus der bekannten initialen Position mit einem maximalen Drehmoment mittels Zündung von Thyristoren, (13), wobei der zulässige Maximalstrom auf den maximal zulässigen Strom gesetzt wird,
e) Messen der durch die Drehung des Läufers (L) induzierten Spannung, und Berechnen der Werte Rotorwinkel ϕ_{Erde} und Winkelgeschwindigkeit ω_{Mittel} (14),
f) Wiederholung der Schritte b) bis f), wenn das Delta von entweder dem Rotorwinkel Δϕ_{Erde} oder der Winkelgeschwindigkeit Δω_{Mittel} über einem festgelegten Schwellwert liegt, wobei auf die im Schritt e) berechneten Rotorwinkel ϕ_{Erde} und Winkelgeschwindigkeit ω_{Mittel} zurückgegriffen wird, um den optimalen Zünd-Winkel des Motors für den Zündvorgang zu ermitteln,
g) Ermittlung des optimalen Zünd-Winkels des Motors anhand der Größen ϕ_{Erde} und ω_{Mittel} (17) .

2. Verfahren gemäß Patentanspruch 1,
**dadurch gekennzeichnet, dass**
die Permanenterregte Synchronmaschine zumindest drei Thyristoren umfasst und die Drehung des Läufers durch Zündung von zwei Thyristoren mit einem maximal zulässigen Strom erfolgt.

3. Verfahren gemäß Patentanspruch 1 oder 2,
**dadurch gekennzeichnet, dass**
die Messung der Spannung in der Sperrzeit der Thyristoren erfolgt.

4. Verfahren gemäß einem der vorherigen Patentansprüche, **dadurch gekennzeichnet, dass**
die Messung durch den Sanftstarter (SS) erfolgt.

5. Verfahren gemäß einem der vorherigen Patentansprüche,
**dadurch gekennzeichnet, dass**
der optimale Zünd-Winkel für die Permanenterregte Synchronmaschine einmalig berechnet wird, und der berechnete Wert für jeden weiteren Startvorgang der Permanenterregten Synchronmaschine verwendet wird.

6. Permanenterregte Synchronmaschine (M) mit Sanftstarter (SS)
beinhaltend einen Läufer (L), einen Stator (St), und einen Sanftstarter (SS) mit Thyristoren,
geeignet und ausgebildet zur Ausführung des Verfahrens nach einem der Patentansprüche 1 bis 5.

## Claims

1. Method for starting up a permanent-magnet synchronous machine (M) including a rotor (L), a stator (St) and a soft starter (SS) with thyristors, comprising the following steps:
a) setting the values rotor angle ϕ_{Earth} and angular speed ω_{Mean} to 0 (10),
b) aligning the rotor (L) in an initial position (11),
c) determining an optimum firing angle of the motor,
d) rotating the rotor (L) from the known initial position with a maximum torque by firing thyristors, (13), wherein the maximum permissible current is set to the maximum permissible current,
e) measuring the voltage induced by the rotation of the rotor (L), and calculating the values rotor angle ϕ_{Earth} and angular speed ω_{Mean} (14),
f) repeating steps b) to f) when the delta of either the rotor angle Δϕ_{Earth} or the angular speed Δω_{Mean} lies above a defined threshold value, wherein the rotor angle ϕ_{Earth} and angular speed ω_{Mean} calculated in step e) are used in order to determine the optimum firing angle of the motor for the firing procedure,
g) determining the optimum firing angle of the motor using the quantities ϕ_{Earth} and ω_{Mean} (17) .

2. Method according to Patent Claim 1, **characterized in that** the permanent-magnet synchronous machine comprises at least three thyristors and the rotor is rotated by firing two thyristors at a maximum permissible current.

3. Method according to Patent Claim 1 or 2, **characterized in that** the voltage is measured in the blocking time of the thyristors.

4. Method according to one of the preceding patent claims, **characterized in that** the measurement is carried out by the soft starter (SS).

5. Method according to one of the preceding patent claims, **characterized in that** the optimum firing angle is calculated once for the permanent-magnet synchronous machine and the calculated value is used for each subsequent procedure for starting the permanent-magnet synchronous machine.

6. Permanent-magnet synchronous machine (M) with soft starter (SS) including a rotor (L), a stator (St) and a soft starter (SS) with thyristors, suitable and designed for executing the method according to one of Patent Claims 1 to 5.

## Revendications

1. Procédé de mise en service d'une machine synchrone à excitation permanente (M), comportant un rotor (L), un stator (St) ainsi qu'un démarreur progressif (SS) à thyristors, comportant les étapes suivantes :
a) réglage des valeurs angle du rotor ϕ_{Erde} et vitesse angulaire ω_{Mittel} à 0 (10),
b) orientation du rotor (L) dans une position initiale (11),
c)détermination d'un angle d'allumage optimal du moteur,
d) rotation du rotor (L) depuis la position initiale connue avec un couple maximal à l'aide de l'allumage de thyristors (13), le courant maximal admissible étant mis sur le courant étant admissible au maximum,
e) mesure de la tension induite par la rotation du rotor (L) et calcul des valeurs angle rotor ϕ_{Erde} et vitesse angulaire ω_{Mittel} (14),
f) répétition des étapes b) à f) lorsque le Delta ou de l'angle du rotor Δϕ_{Erde} ou de la vitesse angulaire Δω_{Mittel} est supérieur à un seuil défini et, pour déterminer l'angle d'allumage optimum du moteur pour le processus d'allumage, on a recours à l'angle rotor ϕ_{Erde} et à la vitesse angulaire ω_{Mittel} calculés en étape e),
g)détermination de l'angle d'allumage optimal du moteur grâce aux grandeurs ϕ_{Erde} et ω_{Mittel} (17).

2. Procédé selon la revendication 1, **caractérisé en ce que** la machine synchrone à excitation permanente comporte au moins trois thyristors, la rotation du rotor se faisant par allumage de deux thyristors avec un courant étant admissible au maximum.

3. Procédé selon la revendication 1 ou 2, **caractérisé en ce que** la mesure de la tension se fait pendant la durée de blocage des thyristors.

4. Procédé selon l'une des revendications précédentes, **caractérisé en ce que** la mesure est réalisée par le démarreur progressif (SS).

5. Procédé selon l'une des revendications précédentes, **caractérisé en ce que** l'angle d'allumage optimal pour la machine synchrone à excitation permanente est calculé une seule fois, la valeur calculée étant utilisée pour chaque processus de démarrage consécutif de la machine synchrone à excitation permanente.

6. Machine synchrone à excitation permanente (M) à démarreur progressif (SS), comportant un rotor (L), un stator (St) et un démarreur progressif (SS) à thyristors, apte et conçue pour la mise en œuvre du procédé selon l'une des revendications 1 à 5.
